# EUROPEAN PATENT APPLICATION

(11) **EP 4 407 765 A1**
(43) Date of publication of application: **31.07.2024**
(21) Application number: 23835830.3
(22) Date of filing: 05.07.2023
(51) Int. Cl.: H01M 50/204, H01M 50/244, H01M 10/613, H01M 10/6556, H01M 10/6567, H01M 50/289, H01M 50/242

(54) **BATTERY PACK AND METHOD FOR MANUFACTURING BATTERY PACK**

(30) Priority: 06.07.2022 KR 20220083118; 01.06.2023 KR 20230070867
(71) Applicant: LG Energy Solution, Ltd., Seoul 07335 (KR)
(72) Inventor: KIM, Ki Young, Daejeon 34122 (KR); SHIN, Ju Hwan, Daejeon 34122 (KR); LEE, Jae Hyun, Daejeon 34122 (KR); JEON, Bo Ra, Daejeon 34122 (KR); LEE, Hyoung Suk, Daejeon 34122 (KR)
(74) Representative: Plasseraud IP
(86) International application number: PCT/KR2023/009509
(87) International publication number: WO 2024/010364

(57) **Abstract**

The present technology relates to a battery pack accommodating a battery module and a method of manufacturing the battery pack.

The present technology allows a first extension part of a side frame to form a module mounting region together with a base plate, so that a load of the battery module mounted in the battery pack may be uniformly distributed, thereby simplifying a structure of the battery pack.

The present technology may have a cooling-integrated structure together with the above-described load distribution structure.

## Description

### [Technical Field]

The present invention relates to a battery pack accommodating a battery module and a method of manufacturing the battery pack.

More particularly, the present invention relates to a battery pack capable of simplifying a structure of a pack housing while efficiently distributing a load of a battery module, and a method of manufacturing the battery pack.

This application claims the benefit of priority based on Korean Patent Application Nos. 10-2022-0083118, filed on July 6, 2022, and 10-2023-0070867, filed on June 1, 2023, and the entire contents of the Korean patent applications are incorporated herein by reference.

### [Background Art]

Battery packs applied to electric vehicles and the like have a structure in which multiple battery modules including a plurality of secondary batteries are connected in series or parallel to obtain high output. In addition, the secondary battery is capable of repeated charging and discharging through electrochemical reactions between components including positive and negative electrode current collectors, separators, active materials, electrolytes, and the like.

Since the battery pack is equipped with multiple battery modules, the battery pack needs to be designed to have a structure capable of stably supporting the load of the modules. Further, in order to save energy and improve energy efficiency, there is a need to develop technology capable of reducing the weight of the battery pack while maintaining or improving its mechanical rigidity.

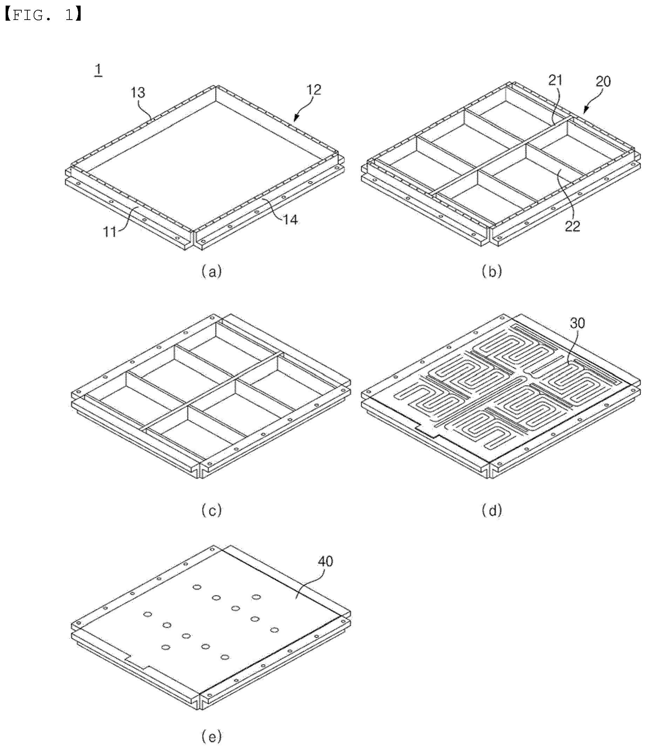

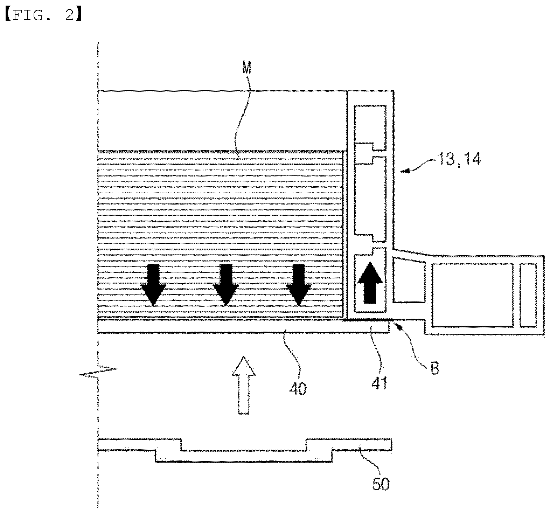

FIG. 1 is a schematic diagram illustrating a battery pack manufacturing process in the related art, which has been suggested by the present applicant, and FIG. 2 is a schematic diagram illustrating a structure of a manufactured battery pack.

Referring to FIG. 1, in the related art, a front frame 11, a rear frame 12, and side frames 13 and 14 on both sides are coupled to create a square-shaped frame (FIG. 1A), a center frame 21 and a plurality of side beams 22 are coupled to the square-shaped frame to form a skeletal frame 20 of the battery pack (FIG. 1B) and then the skeletal frame 20 is turned over (FIG. 1C), a cooling panel 30 in which a cooling channel is formed is coupled to a lower part of the skeletal frame 20 (FIG. 1D), and a base plate 40 is positioned on the cooling panel, and the base plate 40 is coupled to the skeletal frame 20 (FIG. 1E).

FIG. 2 shows a cross-sectional structure of a battery pack 1 manufactured in this way. As shown, the base plate 40 is manufactured in a size that may accommodate and support an entire lower surface area of a battery module M, and an upper surface of an edge 41 of the base plate 40 is welded and joined to lower ends of the side frames to form joint parts B.

However, the battery pack 1 with the above structure has the following drawbacks.

First, since the base plate 40 supports the entire load of the battery module M, the load in a height direction, that is, in a Z-axis direction, is concentrated on the edge 41 of the base plate and the welded joint parts B of the side frames. Therefore, when the battery pack is repeatedly used for a long period of time, due to the load in the Z-axis direction, there is a risk that the edge 41 of the base plate may sag down from the welded joint parts of the side frames 13 and 14 or the joint parts B may open.

Second, in order to withstand the load applied to the joint part B, it is necessary to thicken the base plate 40 or to install a separate lower reinforcement structure 50 for distributing the load. However, when the base plate 40 is thickened, the pack weight increases, reducing energy efficiency. Further, since the load of the base plate 40 itself increases, a greater load may act on the welded joint part B, which is undesirable. Further, when the lower reinforcement structure 50 is installed, the number of parts increases and separate joining operations are required, and thus manufacturing costs are increased.

Third, since the cooling panel 30 and the base plate 40 are separately installed, the weight of the battery pack increases and the structure becomes complicated.

Therefore, there is a need to develop technology capable of effectively distributing the load on the joint part between the base plate and the side frame and simplifying the structure of the battery pack.

### [Related Art Documents]

### [Patent Document]

Korean Patent Publication No. 10-2022-0031530

### [Disclosure]

### [Technical Problem]

The present invention has been made to solve the above problems and to provide a battery pack having a simple structure while effectively distributing a load of battery modules in the battery pack and a method of manufacturing the same.

### [Technical Solution]

In order to solve the aforementioned problems, a battery pack according to the present invention is a battery pack having a module mounting region where a plurality of battery modules are accommodated, the battery pack including a base plate on which the battery modules are mounted, a front frame coupled to a front end of the base plate, a rear frame coupled to a rear end of the base plate, and side frames coupled to both sides of the base plate, in which the base plate has a size that forms only a portion of the module mounting region, and each of the side frames includes a side wall part facing the battery modules and a first extension part extending from a lower portion of the side wall part toward the base plate to be coupled to a side surface of the base plate and supporting a load of the battery modules by forming the module mounting region together with the base plate.

The first extension part may extend a predetermined length to support at least a portion of a lower area of the battery module.

Further, an upper surface of the base plate and an upper surface of the first extension part may form a plane of the same height.

In this case, stepped portions shaped to engage with each other may be provided on a side surface of the base plate and a side surface of the first extension part coupled thereto.

Further, the side frame further may include a second extension part extending outside the battery pack.

The second extension part may have a greater thickness than the first extension part and may be fixedly supported on a structure on which the battery pack is installed.

As one example, the battery pack may further include a center frame extending from the front frame to the rear frame and coupled to the base plate, a module mounting region may be formed between the center frame and the side wall part of the side frame, and the module mounting region may include at least a portion of an upper surface of the first extension part of the side frame and an upper surface of the base plate.

The base plate may be disposed one on each side of the center frame, so that the side surfaces of the base plates on both sides and both side surfaces of the center frame are coupled.

In this case, the center frame may include a vertical partition part and a horizontal extension part extending right and left from a lower portion of the vertical partition part toward the base plate and coupled to the base plate, and an upper surface of the horizontal extension part and the upper surface of the base plate may be positioned on the same plane.

Further, the battery pack may further include a plurality of side beams installed to extend between the vertical partition part of the center frame and the side frames on both sides, and each of the side beams may partition the module mounting region into a plurality of regions by being coupled to the vertical partition part and a side frame part.

The battery module may be fastened to the side wall part of the side frame.

As another example, at least one of the base plate and the side frame may have an outer wall and an inner space surrounded by the outer wall, and the inner space may form a plurality of hollow channels by being divided by a plurality of partition walls extending from the outer wall.

The base plate may be a cooling-integrated base plate in which a first cooling channel is provided in the hollow channel.

In this case, the first extension part of the side frame may have hollow channels, and a second cooling channel may be provided in the hollow channel.

Further, each of the front frame and the rear frame may have a third cooling channel communicating with the first cooling channel and the second cooling channel, and a refrigerant inlet and a refrigerant outlet communicating with the third cooling channel may be formed in one of the front frame and the rear frame.

Alternatively, each of the front frame and the rear frame may have a third cooling channel communicating with the first cooling channel and the second cooling channel, a refrigerant inlet communicating with the third cooling channel may be formed in one of the front frame and the rear frame, and a refrigerant outlet communicating with the third cooling channel may be formed in the other.

A predetermined length of the first extension part provided on each of the side frames on both sides may be the same as a predetermined length of the other, and a ratio of 1/2 of a length of the base plate extending between the side frames on both sides and the predetermined length may range from 6:4 to 9:1.

Predetermined lengths of the first extension parts respectively provided in the side frame on one side and the side frame on the other side may be the same, two base plates coupled to respective corresponding side frames and having the same size may be positioned between the side frame on one side and the side frame on the other side, and a ratio of a length of each base plate extending to the corresponding side frame and the predetermined length may range from 6:4 to 9:1.

The present invention also provides a method of manufacturing the battery pack. The method of manufacturing the battery pack is a method of manufacturing a battery pack having a module mounting region where a plurality of battery modules are accommodated, the method including coupling side surfaces of first extension parts of side frames on both sides extending toward a base plate having a size that forms only a portion of the module mounting region and forming the module mounting region together with the base plate to both side surfaces of the base plate, respectively, coupling a front frame and a rear frame to front and rear ends of the base plate and the first extension parts, respectively, and mounting a plurality of battery modules on the module mounting region including at least a portion of upper surfaces of the first extension parts and an upper surface of the base plate.

A method of manufacturing a battery pack according to another embodiment of the present invention is a method of manufacturing a battery pack having a module mounting region where a plurality of battery modules are accommodated, the method including disposing base plates on both sides of a center frame, respectively, and coupling the base plates on both sides to the center frame, coupling a first extension part of the side frame on one side extending toward the base plate on one side of the center frame and forming a module mounting region together with the base plate on one side to the base plate on one side, coupling a first extension part of the side frame on the other side extending toward the base plate on the other side of the center frame and forming a module mounting region together with the base plate on the other side to the base plate on the other side, coupling a front frame and a rear frame to first extension parts of the one and the other side frames and front and rear ends of the base plates on both sides, respectively, and mounting a plurality of battery modules on the module mounting region including at least a portion of upper surfaces of the first extension parts and an upper surface of the base plate.

### [Advantageous Effects]

According to the above various embodiments of the present invention, it is possible to stably distribute a load of a battery module on a base plate and side frames.

Further, since there is no need for additional reinforcement structures as in the related art due to load distribution, it is possible to simplify a structure of a pack housing.

Further, since the load is effectively distributed on the base plate and the side frames, it is possible to reduce the thickness of the base plate, thereby reducing the weight of a battery pack.

In addition, since a lower structure of the battery pack is formed into a cooling-integrated structure, it is possible to make the pack structure more compact.

### [Brief Description of the Drawings]

FIG. 1 is a schematic diagram illustrating a battery pack manufacturing process in the related art, which has been suggested by the present applicant.
FIG. 2 is a schematic diagram illustrating a structure of a battery pack in the related art.
FIG. 3 is an exploded perspective view illustrating a battery pack of one embodiment of the present invention.
FIG. 4 is an assembled perspective view illustrating the battery pack of one embodiment of the present invention.
FIG. 5 is an assembled perspective view illustrating the battery pack with some components excluded.
FIG. 6 is a schematic diagram illustrating one example of a coupling structure of a base plate and a side frame according to the present invention.
FIG. 7 is a schematic diagram illustrating another example of a coupling structure of a base plate and a side frame according to the present invention.
FIG. 8 is a schematic diagram illustrating a process of manufacturing a battery pack according to the present invention.
FIG. 9 is an exploded perspective view illustrating a battery pack of another embodiment of the present invention.
FIG. 10 is an assembled perspective view illustrating the battery pack of another embodiment of the present invention.
FIG. 11 is a schematic diagram illustrating an example of a coupling structure of a base plate and a side frame according to the embodiment of FIG. 9.
FIG. 12 is a schematic diagram illustrating one example of a cooling path of the battery pack in the embodiment of FIG. 9.
FIG. 13 is a schematic diagram illustrating another example of a cooling path of the battery pack.

### (Reference Signs List)

- 100, 200:: Battery pack
- 110, 210:: Base plate
- 110A, 210A:: Left base plate
- 110B, 210B:: Right base plate
- 120, 220:: Front frame
- 121, 221:: Front cover part
- 122, 222:: Front plate part
- 130, 230:: Rear frame
- 131, 231:: Rear cover part
- 132, 232:: Rear plate part
- 140, 240:: First side frame
- 141, 241:: Side wall part
- 142, 242:: First extension part
- 143, 243:: Second extension part
- 150, 250:: Second side frame
- 151, 251:: Side wall part
- 152, 252:: First extension part
- 153, 253:: Second extension part
- 160, 260:: Center frame
- 161, 261:: Vertical partition part
- 162, 262:: Horizontal extension part
- 170, 270:: Side beam
- M:: Battery module
- A:: Module mounting region
- 214:: First cooling channel
- 244, 254:: Second cooling channel
- 224, 234:: Third cooling channel

### [Detailed Description of the Preferred Embodiments]

The present invention will become more apparent from detailed description of preferred embodiments of the present invention with reference to the accompanying drawings. It should be understood that the embodiments described herein are provided for illustrative purposes to help the understanding of the present invention and the present invention may be variously modified and embodied in forms different from the disclosed embodiments. Furthermore, to help the understanding of the present invention, the accompanying drawings are not drawn to actual scale and the dimension of some elements may be exaggerated.

Hereinafter, the present invention will be described in detail.

A battery pack according to one embodiment of the present invention is a battery pack having a module mounting region where a plurality of battery modules are accommodated, the battery pack including a base plate on which the battery modules are mounted, a front frame coupled to a front end of the base plate, a rear frame coupled to a rear end of the base plate, and side frames coupled to both sides of the base plate, in which the base plate has a size that forms only a portion of the module mounting region, and the side frame includes a side wall part facing the battery modules and a first extension part extending from a lower portion of the side wall part toward the base plate and coupled to a side surface of the base plate and supporting a load of the battery modules by forming the module mounting region together with the base plate.

The present invention also provides a method of manufacturing the battery pack. The method of manufacturing the battery pack is a method of manufacturing a battery pack having a module mounting region where a plurality of battery modules are accommodated, the method including coupling side surfaces of first extension parts of side frames on both sides extending toward a base plate having a size that forms only a portion of the module mounting region and forming the module mounting region together with the base plate to both side surfaces of the base plate, respectively, coupling a front frame and a rear frame to front and rear ends of the base plate and the first extension parts, respectively, and mounting a plurality of battery modules on the module mounting region including at least a portion of upper surfaces of the first extension parts and an upper surface of the base plate.

A method of manufacturing a battery pack according to another embodiment of the present invention is a method of manufacturing a battery pack having a module mounting region where a plurality of battery modules are accommodated, the method including disposing base plates on both sides of a center frame, respectively, and coupling the base plates on both sides to the center frame, coupling a first extension part of the side frame on one side extending toward the base plate on one side of the center frame and forming a module mounting region together with the base plate on one side to the base plate on one side, coupling a first extension part of the side frame on the other side extending toward the base plate on the other side of the center frame and forming a module mounting region together with the base plate on the other side to the base plate on the other side, coupling a front frame and a rear frame to first extension parts of the one and the other side frames and front and rear ends of the base plates on both sides, respectively, and mounting a plurality of battery modules on the module mounting region including at least a portion of upper surfaces of the first extension parts and an upper surface of the base plate.

### (First Embodiment)

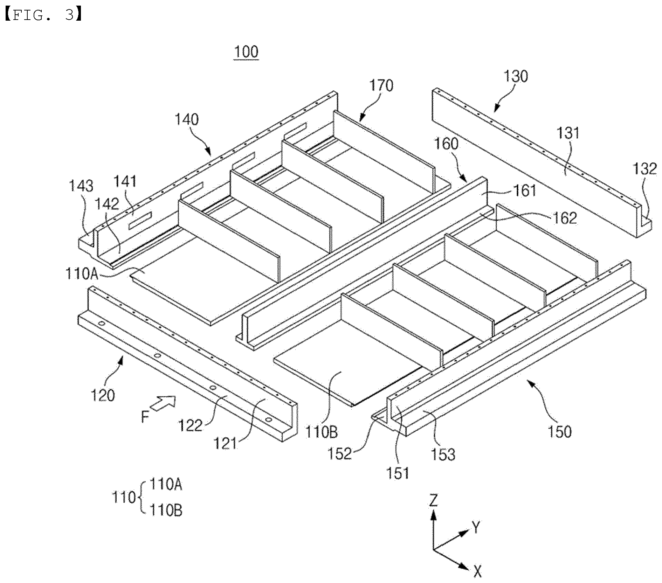

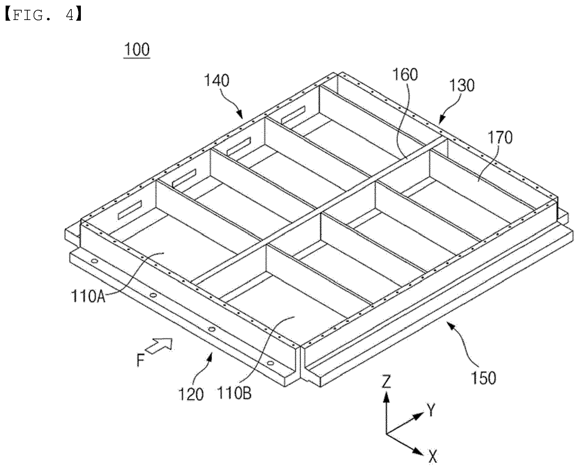

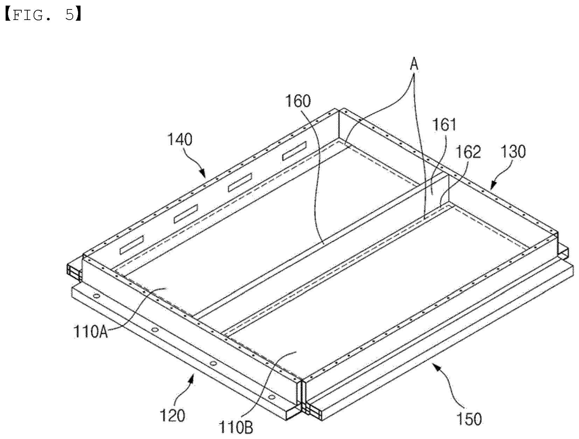

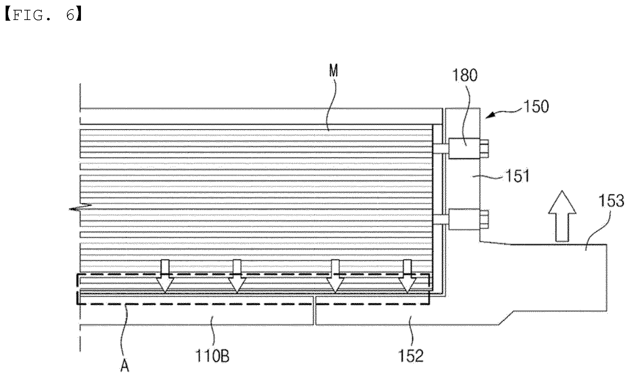

FIG. 3 is an exploded perspective view illustrating a battery pack of one embodiment of the present invention, FIG. 4 is an assembled perspective view illustrating the battery pack of one embodiment of the present invention, FIG. 5 is an assembled perspective view illustrating the battery pack with some components excluded, and FIG. 6 is a schematic diagram illustrating one example of a coupling structure of a base plate and a side frame according to the present invention.

Referring to FIGS. 3 to 6, a battery pack 100 of the present invention includes a base plate 110, a front frame 120, a rear frame 130, and side frames 140 and 150 on both sides.

A plurality of battery modules M are mounted on the base plate 110.

The battery module M may be provided with a module housing for accommodating a plurality of battery cells. The battery cell is a secondary battery, and may be a pouch-type secondary battery, a prismatic secondary battery, or a cylindrical secondary battery. That is, for the battery cell, various battery cells known at the time of filing the present invention may be employed.

The battery module M may be provided with at least one busbar (not shown) configured to electrically interconnect a plurality of battery cells. Further, the plurality of battery modules M may be electrically connected to each other through a power cable or the busbar. The detailed configuration of the battery modules M may be a generally known configuration. Therefore, detailed description thereof will be omitted in the present specification.

Further, the battery pack 100 may accommodate an electrical equipment assembly (not shown). The electrical equipment assembly may accommodate relay devices, current sensors, fuses, a BMS, and a manual service disconnector (MSD). Together with battery modules, the electrical equipment assembly may be packaged within the battery pack 100 so as not to be exposed to the outside.

The base plate 110 may have a plate shape extending in a horizontal direction. Here, the horizontal direction means a direction of the plane of the flat ground. The base plate 110 may be made of a metal material with excellent mechanical rigidity.

In addition, each of the front frame 120, the rear frame 130, and the side frames 140 and 150 on both sides is coupled to the base plate 110. The coupling method may be, for example, friction stir welding.

When viewed from the front based on the arrow F in FIG. 3, the front frame 120 may be coupled to a front end of the base plate 110 to cover the front of the battery module M, and the rear frame 130 may be coupled to a rear end of the base plate 110.

In the present specification, terms indicating directions such as front, rear, left, right, up, and down may vary depending on a position of an observer or an arrangement of the object. However, in the present specification, for convenience of description, directions such as front, rear, left, right, up, and down will be separately indicated based on the view from the direction of the arrow F in FIG. 3.

A plurality of battery modules M may be positioned on the base plate 110. Accordingly, an upper surface of the base plate 110 forms a module mounting region where the plurality of battery modules are accommodated.

FIG. 5 illustrates a battery pack housing excluding a side beam, which will be described later, to more clearly display a module mounting region A. Referring to FIGS. 3 to 5, a width of the base plate 110 of the present invention, that is, a length in an X direction, is smaller than a width (a length in the X direction) of the entire battery pack. In particular, the base plate 110 of the present invention has a side-to-side width that is smaller than the width of the module mounting region A in the battery pack. That is, a size of the base plate width is smaller than the length of the module mounting region A in the X direction. Therefore, the base plate 110 has a size that forms only a portion of the module mounting region A. Accordingly, a portion of a lower area of the plurality of battery modules is supported by the base plate 110, but remaining region portions are positioned outside the base plate 110. These remaining lower area portions are supported by side frames, as will be described below.

In the present specification, the meaning of the base plate 110 "having a size that forms only a portion of the module mounting region" basically includes a case where, first, when one base plate 110 is installed at the bottom of the battery pack, the width of the base plate 110 is formed to be smaller than the width of the module mounting region A. Further, as shown in FIGS. 3 and 4, the meaning also includes a case where, when a center frame 160 is coupled between two base plates 110A and 110B and the module mounting region A is positioned between the center frame 160 and side frames 140 and 150 on both sides, each of two base plates 110A and 110B has a small size (width) such that each base plate forms only a portion of the module mounting region A. That is, the base plate 110 for constructing the battery pack in the present specification may not make up the entire width of the module mounting region A with its own width alone, and forms the entire width of module mounting region only when combined with another component (a first extension part of the side frame to be described below).

Meanwhile, a length (a Y-direction length) of the base plate 110 may be equal to a length of the battery pack 100 in a Y direction.

The front frame 120 may extend long in a right and left direction (the X direction), and may have a shape of being erect in a height direction (a Z direction). A lower surface of the front frame 120 may be coupled to the upper surface of the base plate 110. Further, the lower surfaces of right and left ends of the front frame 120 may be coupled to upper surfaces of first extension parts of the side frames, which will be described below. The front frame 120 may include a front cover part 121 extending in the height direction and a front plate part 122 protruding forward from a lower portion of the front cover part. The front plate part 122 may be fixedly coupled to a structure such as a vehicle.

The rear frame 130 may extend long in the right and left direction (the X direction), and may have an erect shape in the height direction (the Z direction). A lower surface of the rear frame 130 may be coupled to the upper surface of the base plate 110, and lower surfaces of right and left ends of the rear frame 130 may be coupled to the upper surfaces of the first extension parts of the side frames, which will be described below. The rear frame 130 may have a shape the same as or different from the front frame. In FIGS. 3 and 4, the rear frame 130 has the same shape as the front frame by being provided with a rear cover part 131 extending in the height direction and a rear plate portion 132 protruding rearward from a lower portion of the rear cover part 131. The rear plate part 132 may be fixedly coupled to a structure such as a vehicle.

The side frames 140 and 150 on both sides may have a shape extending long in a front-to-rear direction (the Y direction). The side frames include a first side frame 140 that covers the left side of the battery module and a second side frame 150 that covers the right side. When one base plate is provided at the bottom of the battery pack, the first side frame 140 is coupled to a left end of the base plate, and the second side frame 150 is coupled to a right end of the base plate. That is, the side frames are coupled to both sides of the base plate.

Alternatively, as shown in FIGS. 3 to 5, when the left and right base plates 110A and 110B are respectively coupled to both sides of the center frame 160, the first side frame 140 may be coupled to a left end of the left base plate 110A, and the second side frame 150 may be coupled to a right end of the right base plate 110B.

Accordingly, the present invention is provided with the front frame 120, the rear frame 130, and the first and second side frames 140 and 150 to cover the front, rear, left, and right sides of the battery module.

The first side frame 140 includes a side wall part 141 facing the battery module, and a first extension part 142 extending from a lower portion of the side wall part toward the (left) base plate 110A. The second side frame 150 also includes a side wall part 151 facing the battery module and a first extension part 152 extending from a lower portion of the side wall part toward the (right) base plate 110B. A characteristic feature of the present invention is that the first extension parts 142 and 152 are respectively coupled to the side surfaces of the left and right base plates and form the module mounting region A together with the base plates. That is, the first extension parts 142 and 152 of the first and second side frames 140 and 150 extend a predetermined length toward the base plate 110 to support at least a portion of the lower area of the battery module. Accordingly, at least a portion of the upper surfaces of the first extension parts 142 and 152 and the upper surfaces of the base plates 110A and 110B form the module mounting region A together. As shown, since the widths of the base plates 110A and 110B are larger than the widths of the first extension parts 142 and 152, the lower area of the battery module supported by the base plates is larger than the lower area of the battery module supported by the first extension parts. The first extension parts 142 and 152 support the lower surface of the battery module with a relatively smaller area than the base plates. However, since the base plates and the side frames, specifically the first extension parts 142 and 152 of the side frames and the base plates 110A and 110B support the load of the battery module together, the battery module may be stably supported.

The lengths of the first extension part 142 provided in the first side frame 140 and the first extension part 152 provided in the second side frame 150 may be the same. That is, the extension length (a predetermined length) of each of the first extension part 142 and 152 extending from the lower portions of side wall parts towards the base plates may be the same. In this case, a single base plate may be positioned between the first and second side frames 140 and 150.

In order to properly distribute the load on the base plate and the first extension part, a ratio of 1/2 of the length of the single base plate extending between the first side frame 140 and the second side frame 150 and a predetermined length of each of the first extension parts 142 and 152 may range from 6:4 to 9:1. For example, when the ratio between the lengths is less than 6:4, the length of the first extension part may become too large, and thus the weight of the first side frame may be increased, and welding of the first side frame may become cumbersome. Further, when the ratio between the lengths is greater than 9:1, the length of the first extension part may become too small, and a load distribution effect of the battery module may be halved.

Meanwhile, as shown in FIGS. 3 to 5, two base plates 110A and 110B of the same size may be positioned between the first side frame 140 and the second side frame 150. In this case, in order to properly distribute the load on each of the base plates and the first extension parts, the ratio of a length (an X-direction length) of each of the base plates 110A and 110B extending to the corresponding side frame and the predetermined length may range from 6.4 to 9:1.

The first and second side frames 140 and 150 include second extension parts 143 and 153 extending in an outward direction of the battery pack, respectively. The second extension parts 143 and 153 are parts that are fixedly supported on a structure on which the battery pack 100 is installed, for example, a vehicle. That is, the second extension parts 143 and 153 include fastening points to the vehicle. Since the second extension parts 143 and 153 are directly fastened to the vehicle, the second extension parts 143 and 153 receive a greater load than the first extension parts 142 and 152. Therefore, in order to stably fasten and fix the battery pack to the vehicle, the second extension parts 143 and 153 are formed to be thicker than the first extension parts 142 and 152.

FIG. 6 clearly shows the effect of distributing the load by the battery pack according to the present invention. In FIG. 6, a right surface of the right base plate 110B and one side surface of the first extension part 152 of the second side frame 150 are coupled. The coupling may be performed, for example, by welding. The second extension part 153 of the second side frame 150 is fixedly coupled to a structure such as a vehicle.

A right surface of the base plate and a side surface of the first extension part are coupled so that the upper surface of the base plate 110B and the upper surface of the first extension part 152 form a plane of the same height. Accordingly, the battery module may be stably supported on a flat plane of the same height. As shown in FIG. 6, most of the lower surface of the battery module M is supported by the upper surface of the base plate 110B, but one side of the lower surface is supported by the upper surface of the first extension part 152. That is, since the lower surface of the battery module M is evenly supported across the upper surface of the base plate 110B and the first extension part 152, the load of the battery module is supported by the base plate and the first extension part together. Further, since a coupling site of the base plate and the side frame is not disposed to be biased toward the side end of the base plate as shown in FIG. 1, but is positioned at the end of the first extension part 152 extending a predetermined length toward the inside of the base plate, the load of the battery module may be uniformly distributed. Therefore, it is possible to prevent the load of the battery module from being concentrated as in the related art. In this case, the second extension part 153 is fixed to the structure and receives stress in an opposite direction to the load of the battery module, but since the second extension part 153 is formed to be thicker than the first extension part 152, the second extension part 153 may sufficiently handle the stress.

As described above, according to the present invention, the first extension parts 142 and 152 of the side frames 140 and 150 and the base plate 110 form the module mounting region A together, so that the load of the battery module may be uniformly distributed. Therefore, there is no need to install a separate reinforcement structure to reinforce the base plate as in the related art. Further, there is no need to make the width of the base plate as long as in the related art, and the thickness of the base plate may be reduced as the side frames distribute a load and bear the distributed load. Accordingly, the structure of the battery pack, such as the base plate, may be simplified. Further, as will be described below, when the base plate is constructed as a cooling-integrated type, the structure of the battery pack may be constructed more compactly.

In FIG. 6, the coupling structure of the right base plate 110B and the second side frame 150 is shown, but the coupling structure of the left base plate 110A and the first side frame 140 is also the same.

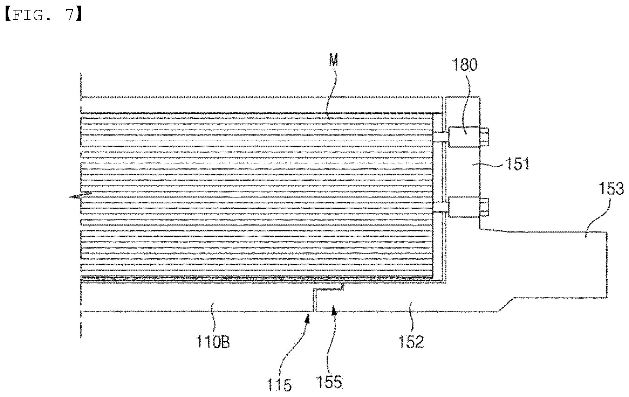

FIG. 7 is a schematic diagram illustrating another example of a coupling structure of a base plate and a side frame according to the present invention. In FIG. 7, stepped portions 115 and 155 shaped to engage with each other are formed on a side surface of a base plate 110B and a side surface of a first extension part 152 of a second side frame 150 coupled thereto. That is, a right surface of the right base plate 110B is provided with a stepped portion 115 consisting of two vertical surfaces and a horizontal surface disposed between the two vertical surfaces. Further, a left surface of the first extension part 152 is also provided with a stepped portion 155 consisting of two vertical surfaces and a horizontal plane disposed between the two vertical surfaces and shaped to engage with the stepped portion 115 of the base plate. When the base plate 110B and the first extension part 152 are coupled, since the horizontal surface of the stepped portion 115 of the base plate and the horizontal surface of the stepped portion 155 of the first extension part come into contact and mutually bear a load of the battery module, the load may be more efficiently distributed than in the example of FIG. 5. Further, when facing vertical surfaces of the stepped portions 115 and 155 are coupled, by welding upper ends and lower ends of the vertical surfaces, the base plate 110B and the first extension part 152 of the second side frame 150 may be easily coupled.

Meanwhile, as shown in FIGS. 6 and 7, the battery module M mounted on the base plate 110B and the first extension part 152 may be fastened to the side wall part 151 of the side frame by fastening members 180. Module fastening by the fastening members 180 has various technical meanings. First, by fixing the battery module M to the side wall part 151 by the fastening members 180, the battery module may be accurately positioned in the set module mounting region A in the battery pack 100. Second, by fastening the battery module M to the side wall part 151 of the side frame, even when vibrations occur while the vehicle is driven, the battery module may be stably maintained in the module mounting region A in the battery pack without moving. Finally, by fixing the battery module to the side wall part by the fastening members 180, the load of the battery module M may be further distributed. In this case, since the load of the battery module is distributed to and supported by the base plate 110B, the side wall part 151 of the side frame, and the first extension part 152, there is an advantage in that the problem of load concentration may be avoided as much as possible.

Referring to FIGS. 3 to 5, the battery pack 100 of the present embodiment further includes the center frame 160 between the left and right base plates 110A and 110B. The center frame 160 serves to partition the plurality of battery modules M into the left and right, extends from the front frame 120 to the rear frame 130, and is coupled to the base plate 110. The battery module M is mounted between the center frame 160 and the side wall parts 141 and 151 of the side frames 140 and 150. That is, the module mounting region is formed between the center frame 160 and the side wall parts of the side frames. The left and right base plates 110A and 110B are coupled to the first extension parts 142 and 152 of the first and second side frames 140 and 150, respectively, and the module mounting region A is at least a portion of the upper surfaces of the first extension parts 142 and 152 of the side frames and the upper surface of the base plate (see FIG. 5).

The center frame 160 may have a vertical partition part 161 and horizontal extension parts 162 extending left and right from the lower portion of the vertical partition part and coupled to the left and right base plates 110A and 110B, respectively. By welding the horizontal extension parts 162 and facing side surfaces of the base plates 110A and 110B, the center frame 160 and the left and right base plates 110A and 110B may be coupled. The upper surfaces of the horizontal extension parts 162 and the upper surfaces of the base plates 110A and 110B are positioned on the same plane. That is, since the upper surfaces of the horizontal extension parts 162 and the base plates 110A and 110B form a flat surface, the battery module may be stably supported on the flat surface. In this case, the horizontal extension parts 162 may also form the module mounting region together with the base plates 110A and 110B and the first extension parts 142 and 152. As described above, in the technical idea that "the base plate has a size that forms only a portion of the module mounting region" in the present invention, the case of FIGS. 3 and 4 where the horizontal extension parts of the center frame form a portion of the module mounting region is included.

In the present embodiment, the center frame 160 is provided with horizontal extension parts 162, but it is also possible that the center frame 160 does not have a horizontal extension part. That is, it is possible that the center frame is formed only with the vertical partition part 161 and the left and right base plates are coupled to both lower sides of the vertical partition part.

The battery pack 100 of the present embodiment further includes side beams 170 for partitioning each battery module. The side beams 170 are installed to extend between the vertical partition part 161 of the center frame 160 and the side frames 140 and 150 on both sides. That is, each of a plurality of side beams 170 is installed between the vertical partition part 161 and the first side frame 140 and between the vertical partition part 161 and the second side frame 150. The lower surface of the battery pack that is partitioned by the side beams 170 becomes the module mounting region A.

An arrangement of the plurality of battery modules in the battery pack is determined depending on an arrangement of the center frame 160 and the side beams 170. In the present embodiment, the battery modules are arranged in four rows to face each other. However, the arrangement of the battery module is not limited thereto, and it is also possible to arrange the battery module in a different form depending on the arrangement of the center frame 160 and/or the side beams 170. In any case, the module mounting region A where the battery module is mounted is formed on the base plate 110 and the first extension parts 142 and 152 of the side frames. As shown in FIG. 5, the upper surface of the horizontal extension part of the center frame may also be included in the module mounting region. When the battery module M is positioned close to the side wall part 151 of the side frame, almost the entire upper surface of the first extension part 152 is included in the module mounting region A. Usually, in order to secure an insulation distance, the battery module M and the side wall part 151 are spaced apart by a predetermined distance as shown in FIGS. 5 and 6. In this case, a portion of the upper surface of the first extension part 152 on which the module is placed is included in the module mounting region A. In any case, in the present invention, the first extension part 152 may stably support a portion of the lower surface of the module, and thus the load of the module may be uniformly distributed.

In the embodiment of FIGS. 3 to 5, a case where the side frames 140 and 150 are disposed on the left and right sides of the battery module has been disclosed. However, depending on a battery pack design, side frames may be disposed on the front and rear sides of the battery module. In this case, frames corresponding to the front and rear frames of FIGS. 3 to 5 may be installed on the left and right sides of the battery module.

In addition, in the present embodiment, a case where side frames disposed on both sides of the battery pack have the first extension parts is described. However, in some cases, not only the side frames on both sides but also all the frames forming the side walls of the battery pack, that is, including the front and rear frames of FIG. 3, may be provided with the first extension part extending toward the base plate. In this case, not only the width but also the length of the base plate may be reduced as much as the extended length of the first extension part. In this case, at a corner portion where each side frame and the front or rear frame overlap, the lengths of the first extension parts of the respective frames may be different. For example, the first extension part 142 of the first side frame 140 may extend long along a longitudinal direction (the Y direction) of the battery pack, but the first extension part formed on the front frame 120 may extend along a width direction (the X direction) of the battery pack, but may be formed not to extend to a portion where the first extension part 142 of the first side frame 140 is positioned.

In addition, an insulating pad or a thermally conductive resin layer such as thermal resin may be interposed between the base plate and the module.

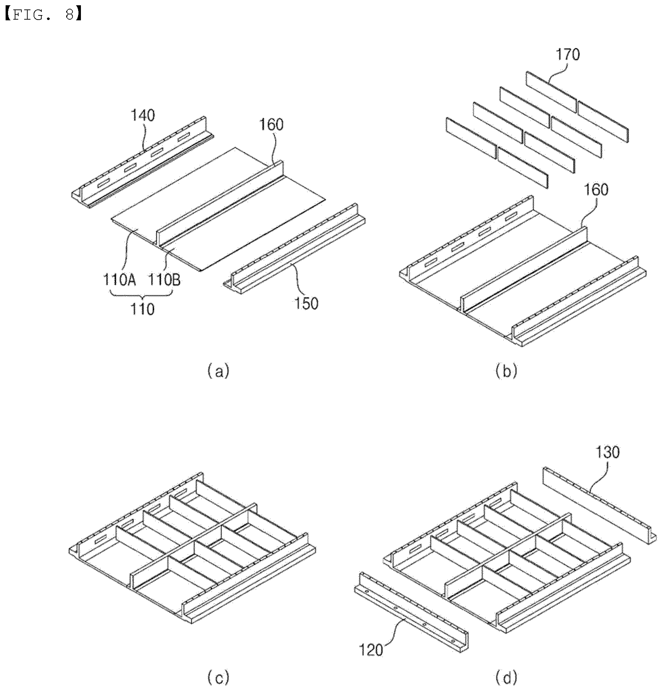

FIG. 8 is a schematic diagram illustrating a process of manufacturing a battery pack according to the present invention.

When a battery pack in the related art is manufactured as shown in FIG. 1, a skeletal frame of the battery pack is made and then a base plate is coupled to a lower portion of the skeletal frame. Accordingly, as described above, the load is concentrated on a side end of the battery pack where the base plate and the skeletal frame are joined. Further, in the related art, since a separate cooling panel is coupled before joining the base plate to the skeletal frame, the structure is complicated.

On the other hand, the method of manufacturing a battery pack having a module mounting region where a plurality of battery modules are accommodated according to one embodiment of the present invention includes coupling side surfaces of first extension parts 142 and 152 of side frames 140 and 150 on both sides extending toward a base plate 110 having a size that forms only a portion of the module mounting region A and forming the module mounting region A together with the base plate to both side surfaces of the base plate, respectively, coupling a front frame 120 and a rear frame 130 to front and rear ends of the base plate 110 and the first extension parts 142 and 152, respectively, and mounting a plurality of battery modules M on the module mounting region A including at least a portion of upper surfaces of the first extension parts 142 and 152 and an upper surface of the base plate 110.

That is, in the method of manufacturing a battery pack according to one embodiment of the present invention, side frames (first and second side frames 140 and 150) on both sides are first coupled to both sides of the base plates 142 and 152. When one base plate is provided, the first extension parts 142 and 152 of the first and second side frames 140 and 150 are respectively coupled to both sides of the base plate 110. In this case, the base plate 110 has a size that forms only a portion of the module mounting region A, and the first extension parts 142 and 152 form the module mounting region together with the base plate 110.

Then, the front frame 120 and the rear frame 130 are coupled to the front and rear ends of the base plate 110, respectively. In this case, the first extension parts 142 and 152 of the first and second side frames 140 and 150 are positioned at left and right ends of the base plate, and the left and rear ends of the front frame 120 and the rear frame 130 are coupled to the first extension parts 142 and 152 of the first and second side frames 140 and 150, respectively.

Then, a plurality of battery modules are mounted on the module mounting region A including at least a portion of upper surfaces of the first extension parts 142 and 152 and an upper surface of the base plate. A portion of the lower surface of the battery module M may be supported by first extension parts 142 and 152 in addition to the base plate, and since coupling points between the base plate and the first extension parts are positioned at ends of the first extension parts 142 and 152 that extend a predetermined length inside the battery pack, the load of the battery module may be uniformly distributed without being biased.

Further, a method of manufacturing a battery pack according to another embodiment of the present invention is a method of manufacturing a battery pack having a module mounting region where a plurality of battery modules are accommodated, the method including disposing base plates 110A and 110B on both sides of a center frame 160, respectively, and coupling the base plates 110A and 110B on both sides and the center frame 160, coupling a first extension part 142 of the side frame 140 on one side extending toward the base plate 110A on one side of the center frame and forming a module mounting region together with the base plate 110A on one side to the base plate 110A on one side, coupling a first extension part 152 of the side frame 150 on the other side extending toward the base plate 110B on the other side of the center frame and forming a module mounting region together with the base plate 110B on the other side to the base plate 110B on the other side, coupling a front frame 120 and a rear frame 130 to first extension parts 142 and 152 of the one and the other side frames and front and rear ends of the base plates 110A and 110B on both sides, respectively, and mounting a plurality of battery modules M on the module mounting region A including at least a portion of upper surfaces of the first extension parts 142 and 152 and an upper surface of the base plate.

The present embodiment is a manufacturing method for a case in which the center frame 160 and the two base plates 110A and 110B are provided on the left and right sides of the center frame. Accordingly, before coupling the base plates 110A and 110B to the first extension parts 142 and 152, an operation of coupling the center frame 160 and the base plates 110A and 110B is first performed. That is, (left and right) base plates 110A and 110B are disposed on both sides of the center frame 160, respectively, and the base plates on both sides are coupled to the center frame.

Then, the first extension part 142 of the first side frame 140 is coupled to the left surface of the base plate 110A on one side (left side) of the center frame 160.

Next, the first extension part 152 of the second side frame 150 is coupled to the right surface of the base plate 110B on the other (right) side of the center frame 160.

The order of coupling the first and second side frames to the base plates may be reversed.

After the coupling of the first and second side frames to the base plates is completed, the front frame 120 and the rear frame 130 are coupled to the front and rear ends of the first extension parts 142 and 152 of the first and second side frames and the front and rear ends of the base plates 110A and 110B on both sides, respectively.

Finally, a plurality of battery modules are mounted on the module mounting region including at least a portion of upper surfaces of the first extension parts 142 and 152 and upper surfaces of the base plates 110A and 110B.

Meanwhile, in a step where the coupling of the first and second side frames to the base plates is completed, an operation of fastening a plurality of side beams 170 between the center frame and the first and second side frames may be performed. After fastening the side beams, a step of coupling the front frame 120 and the rear frame 130 to the base plates 110A and 110B and the side frames 140 and 150 may be performed. Alternatively, it is also possible to first fasten the front frame and rear frame to the base plates and side frames to create a frame of the type shown in FIG. 5, and then couple the side beams.

### (Second Embodiment)

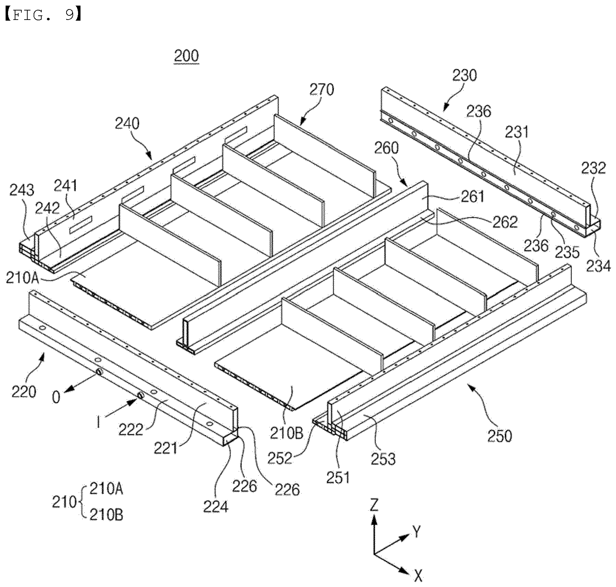

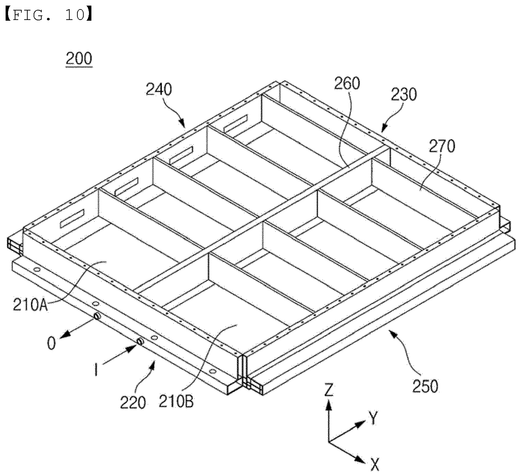

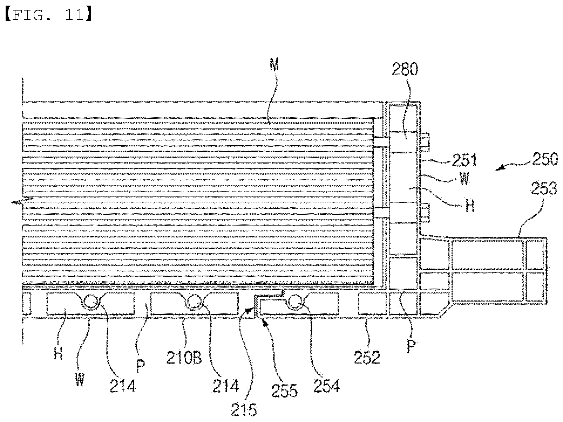

FIG. 9 is an exploded perspective view illustrating a battery pack of another embodiment of the present invention, FIG. 10 is an assembled perspective view illustrating the battery pack of another embodiment of the present invention, and FIG. 11 is a schematic diagram illustrating an example of a coupling structure of a base plate and a side frame according to the embodiment of FIG. 9.

In the present embodiment, at least one of base plates 210A and 210B and side frames 240 and 250 has an outer wall W and an inner space H surrounded by the outer wall. Further, the inner space H may form a plurality of hollow channels by being divided by a plurality of partition walls P extending from the outer wall W.

For example, the base plates 210A and 210B and/or the side frames 240 and 250 may be manufactured as hollow frames by extruding a metal material such as aluminum so that an empty space is formed therein. By constructing the frames to be hollow in this way, the weight of the battery pack 200 may be reduced and energy efficiency may be increased. Additionally, when the rib-shaped partition walls P are formed in the inner space, the mechanical rigidity of the frames may be maintained at a reliable level.

The hollow channels may be formed in either or both of the side frames 240 and 250 and the base plates 210A and 210B.

In this case, the hollow channels may be formed in all of the first extension parts 242 and 252, side wall parts 241 and 251, and second extension parts 243 and 253 of the side frames 240 and 250, as shown in FIG. 11.

When a plurality of hollow channels are formed in the base plates 210A and 210B, not only may the weight be reduced, but this space may also be used as a cooling channel installation part. That is, by constructing a cooling-integrated base plate with a cooling channel integrated into the base plate, rather than installing a cooling panel separate from the base plate as in the related art, a lower structure of the battery pack may be further simplified.

Referring to FIGS. 9 and 11, a plurality of hollow channels in left and right base plates 210A and 210B extend in a longitudinal direction (a Y direction), and a first cooling channel 214 is installed in each hollow channel. A direction and arrangement of the first cooling channels 214 are determined according to the direction and arrangement of the hollow channels. Therefore, when the hollow channels are formed in a width direction (an X direction), the first cooling channels 214 are also installed in the width direction.

In this case, the first extension parts 242 and 252 of the side frames may also have hollow channels, and second cooling channels 244 and 254 may be installed in the hollow channels. Referring to FIG. 11, similar to the first cooling channels 214 of the base plate 210B, the second cooling channel 254 is shown as being installed to extend along the longitudinal direction in the hollow channel of the first extension part 252. That is, all the first and second cooling channels 214, 244, and 254 form refrigerant flow passages extending in the longitudinal direction of the battery pack.

Even in the present embodiment, the load distribution effect by the first extension parts 242 and 252 is achieved. That is, as shown in FIG. 11, the first extension part 252 of the side frame 250 extending toward one side surface of the base plate 210B is coupled to the base plate 210B. In the present embodiment, stepped portions 215 and 255 shaped to engage with each other are formed on the coupling side surfaces of the base plate 210B and the first extension part 252, respectively. Accordingly, the load of the battery module may be more uniformly distributed. Further, in the present embodiment, both the base plate 210B and the side frame 250 may be made of a light extruded frame with hollow channels, thereby reducing the load of the battery pack. In addition, by having a cooling-integrated structure with first and second cooling channels within the hollow channels of the base plates and side frames, there is no need to install a separate cooling panel.

Referring back to FIG. 9, the front frame 220 and the rear frame 230 of the present embodiment include third cooling channels 224 and 234 communicating with the first cooling channels 214 and the second cooling channels 244 and 254. Specifically, the front frame 220 includes a front cover part 221 and a front plate part 222 installed on the lower portion of the front cover part 221 and including the third cooling channel 224. In order to allow the third cooling channel 224 of the front plate part 222 to communicate with the first and second cooling channels, communication holes 225 that communicate with the first and second cooling channels are provided in a rear surface of the front plate part 222. Further, coupling protrusions 226 for coupling with the base plates 210A and 210B and the first extension parts 242 and 252 may be provided at upper and lower ends of the rear surface of the front plate part 222. The front frame 220 may be coupled to the base plates and the first extension parts by bringing the coupling protrusions 226 into contact with the upper and lower surfaces of the base plates 210A and 210B and the first extension parts 242 and 252 and welding the coupling protrusions 226.

The rear frame 230 also includes a rear cover part 231 and a rear plate part 232 installed on the lower portion of the rear cover part and having the third cooling channel 234. In order to allow the third cooling channel 234 of the rear plate part to communicate with the first and second cooling channels, communication holes 235 that communicate with the first and second cooling channels are provided in a front surface of the rear plate part 232. Further, coupling protrusions 236 for coupling with the base plates and the first extension parts may be provided at upper and lower ends of the front surface of the rear plate part 232. The rear frame 230 may be coupled to the base plates and the first extension parts by bringing the coupling protrusions 236 into contact with the upper and lower surfaces of the base plates 210A and 210B and the first extension parts 242 and 252 and welding the coupling protrusions 236.

The third cooling channels 224 and 234 provided in the front and rear plates, respectively, communicate with the first cooling channels 214 installed in the hollow channels of the base plates and the second cooling channels 244 and 254 installed in the hollow channels of the first extension parts, respectively.

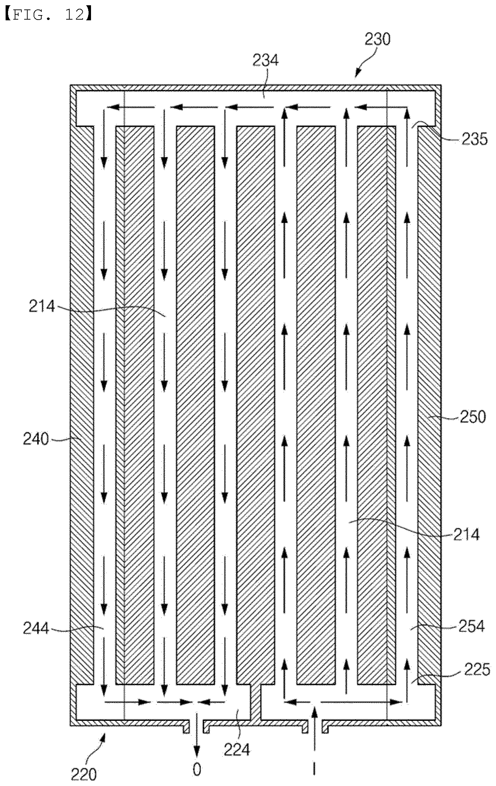

FIG. 12 is a schematic diagram illustrating one example of a cooling path of the battery pack in the embodiment of FIG. 10. As shown in FIG. 12, a refrigerant inlet I and a refrigerant outlet O may be formed at the front of the front plate part 222. That is, both the refrigerant inlet I and the refrigerant outlet O may be formed on a front side of the battery pack 200. Alternatively, the refrigerant inlet I and the refrigerant outlet O may be formed at the rear of the rear plate part 232.

As shown, a refrigerant (e.g., water) injected into the refrigerant inlet I is introduced into the first cooling channels 214 on one side of the base plate and the second cooling channel 254 of the first extension part 252 of the second side frame 250 through the third cooling channel 224 and the communication holes 225 of the front frame 220. The refrigerant flows along the longitudinal direction of the battery pack and reaches the third cooling channel 234 through the communication holes 235 of the rear frame 230. Then, the refrigerant returns from the third cooling channel of the rear frame 230 so that a cooling path returning the refrigerant outlet O of the front frame 220 through the first cooling channels 214 on the other side of the base plate and the second cooling channel 244 of the first extension part 242 of the first side frame 240 is formed.

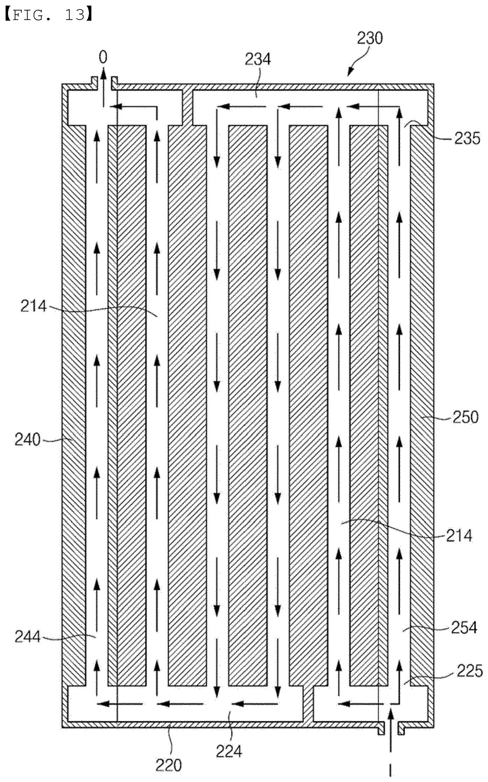

FIG. 13 is a schematic diagram illustrating another example of a cooling path of the battery pack.

In the present example, the front frame 220 is provided with the refrigerant inlet I, and the rear frame 230 is provided with the refrigerant outlet O.

In this case, a cooling path may be formed along the refrigerant inlet I of the front frame 220 - the third cooling channel 224 of the front frame 230 - the first cooling channel 214 of the base plate and the second cooling channel 254 of the first extension part 252 -third cooling channel 234 of the rear frame 230 - the first cooling channel 214 of the base plate - the third cooling channel 224 of the front frame - the first cooling channel 214 of the base plate and the second cooling channel 244 of the first extension part 242 - the third cooling channel 234 of the rear frame 230 - the refrigerant outlet O.

As described above, in the present invention, the cooling path may be formed in various ways by installing cooling channels in the base plate and the first extension part of the side frame.

Meanwhile, the battery pack may include a pack cover (not shown) that covers the top of the battery module and is coupled to the side frames.

The above description is merely illustrative of the technical idea of the present invention, and those of ordinary skill in the art to which the present invention pertains will be able to make various modifications and variations without departing from the essential characteristics of the present invention. Accordingly, the drawings disclosed in the present invention are not intended to limit the technical idea of the present invention but to explain the technical idea, and the scope of the technical idea of the present invention is not limited by these drawings. The scope of protection of the present invention should be interpreted by the accompanying claims, and all technical ideas within the scope equivalent thereto should be construed as being included in the scope of the present invention.

## Claims

1. A battery pack having a module mounting region where a plurality of battery modules are accommodated, the battery pack comprising:
a base plate on which the battery modules are mounted;
a front frame coupled to a front end of the base plate;
a rear frame coupled to a rear end of the base plate; and
side frames coupled to both sides of the base plate,
wherein the base plate has a size that forms only a portion of the module mounting region, and
each of the side frames includes a side wall part facing the battery modules and a first extension part extending from a lower portion of the side wall part toward the base plate to be coupled to a side surface of the base plate and supporting a load of the battery modules by forming the module mounting region together with the base plate.

2. The battery pack of claim 1, wherein the first extension part extends a predetermined length from the lower portion of the side wall part toward the base plate to support at least a portion of a lower area of the battery module.

3. The battery pack of claim 1, wherein an upper surface of the base plate and an upper surface of the first extension part form a plane of the same height.

4. The battery pack of claim 1, wherein stepped portions shaped to engage with each other are provided on a side surface of the base plate and a side surface of the first extension part coupled thereto.

5. The battery pack of claim 1, wherein the side frame further includes a second extension part extending outside the battery pack.

6. The battery pack of claim 5, wherein the second extension part has a greater thickness than the first extension part and is fixedly supported on a structure on which the battery pack is installed.

7. The battery pack of claim 1, further comprising a center frame extending from the front frame to the rear frame and coupled to the base plate,
wherein the module mounting region is disposed between the center frame and the side wall part of the side frame, and
the module mounting region includes at least a portion of an upper surface of the first extension part of the side frame and an upper surface of the base plate.

8. The battery pack of claim 7, wherein the base plate is disposed one on each side of the center frame, so that the side surfaces of the base plates on both sides and both side surfaces of the center frame are coupled.

9. The battery pack of claim 8, wherein the center frame includes a vertical partition part and a horizontal extension part extending right and left from a lower portion of the vertical partition part toward the base plate and coupled to the base plate, and
an upper surface of the horizontal extension part and the upper surface of the base plate are positioned on the same plane.

10. The battery pack of claim 9, further comprising a plurality of side beams installed to extend between the vertical partition part of the center frame and the side frames on both sides,
wherein each of the side beams partitions the module mounting region into a plurality of regions by being coupled to the vertical partition part and the side frames.

11. The battery pack of claim 1, wherein the battery module is fastened to the side wall part of the side frame.

12. The battery pack of claim 1, wherein at least one of the base plate and the side frame has an outer wall and an inner space surrounded by the outer wall, and
the inner space forms a plurality of hollow channels by being divided by a plurality of partition walls extending from the outer wall.

13. The battery pack of claim 12, wherein the base plate is a cooling-integrated base plate in which a first cooling channel is provided in the hollow channel.

14. The battery pack of claim 13, wherein the first extension part of the side frame has hollow channels, and
a second cooling channel is provided in the hollow channel.

15. The battery pack of claim 14, wherein each of the front frame and the rear frame has a third cooling channel communicating with the first cooling channel and the second cooling channel, and
a refrigerant inlet and a refrigerant outlet communicating with the third cooling channel are provided in one of the front frame and the rear frame.

16. The battery pack of claim 14, wherein each of the front frame and the rear frame has a third cooling channel communicating with the first cooling channel and the second cooling channel, and
a refrigerant inlet communicating with the third cooling channel is provided in one of the front frame and the rear frame, and a refrigerant outlet communicating with the third cooling channel is provided in the other of the front frame and the rear frame.

17. A method of manufacturing a battery pack having a module mounting region where a plurality of battery modules are accommodated, the method comprising:
coupling side surfaces of first extension parts of side frames on both sides extending toward a base plate and forming the module mounting region together with the base plate to both side surfaces of the base plate having a size that forms only a portion of the module mounting region, respectively;
coupling a front frame and a rear frame to front and rear ends of the base plate and the first extension parts, respectively; and
mounting a plurality of battery modules on the module mounting region including at least a portion of upper surfaces of the first extension parts and an upper surface of the base plate.

18. A method of manufacturing a battery pack having a module mounting region where a plurality of battery modules are accommodated, the method comprising:
disposing base plates on both sides of a center frame, respectively, and coupling the base plates on both sides to the center frame;
coupling a first extension part of the side frame on one side extending toward the base plate on one side of the center frame and forming the module mounting region together with the base plate on one side to the base plate on one side;
coupling a first extension part of the side frame on the other side extending toward the base plate on the other side of the center frame and forming the module mounting region together with the base plate on the other side to the base plate on the other side;
coupling a front frame and a rear frame to the first extension parts of the one and the other side frames and front and rear ends of the base plates on both sides, respectively; and
mounting a plurality of battery modules on the module mounting region including at least a portion of upper surfaces of the first extension parts and an upper surface of the base plate.

19. The battery pack of claim 2, wherein a predetermined length of the first extension part provided on each of the side frames on both sides is the same as a predetermined length of the other,
a single base plate is positioned between the side frames on both sides, and
a ratio of 1/2 of a length of the base plate extending between the side frames on both sides and the predetermined length ranges from 6:4 to 9:1.

20. The battery pack of claim 2, wherein predetermined lengths of the first extension parts respectively provided in the side frame on one side and the side frame on the other side are the same,
two base plates coupled to respective corresponding side frames and having the same size are positioned between the side frame on one side and the side frame on the other side, and
a ratio of a length of each base plate extending to the corresponding side frame and the predetermined length ranges from 6:4 to 9:1.
